# FASCICULE DE BREVET EUROPEEN

(11) **EP 1 378 425 B1**
(45) Date de publication et mention de la délivrance du brevet: **14.02.2007**
(21) Numéro de dépôt: 03291628.0
(22) Date de dépôt: 02.07.2003
(51) Int. Cl.: B62D 33/027, B60J 5/10, B60J 5/12, B62D 25/20

(54) **Système de portillon pour plateau arrière de véhicule automobile**
Schwenktür für die Ladeplattform eines Kraftfahrzeuges
Gate for rear part of vehicle load floor

(30) Priorité: 02.07.2002 FR 0208233
(43) Date de publication de la demande: 07.01.2004
(73) Titulaire: Renault s.a.s., 92100 Boulogne Billancourt (FR)
(72) Inventeur: Pierre, Bernard, 106-0031 Tokyo (JP)

(56) Documents cités:
- DE-A- 19 522 296
- US-A- 5 630 637
- US-A- 6 131 989
- US-A1- 2002 008 396
- US-B1- 6 390 527

## Description

La présente invention concerne un système de portillon pour plateau arrière de véhicule automobile.

Des véhicules automobiles présentent des plateaux arrière séparés d'une cabine du véhicule et dont le pourtour est fermé à l'aide de cloisons latérales et de portillons battants pour former un volume de chargement généralement ouvert sur le dessus.

Des objets encombrants peuvent présenter des dimensions supérieures aux dimensions du volume de chargement du plateau arrière, ne permettant pas de les disposer dans ledit volume de chargement.

Dans ce cas, on peut simplement disposer un objet encombrant en appui sur un bord d'une cloison du plateau arrière. Dans ces conditions, la fixation de l'objet est peu aisée. De plus, lors du passage du véhicule sur des irrégularités d'un revêtement de route, l'objet peut cogner le bord supérieur des cloisons et abîmer une carrosserie du véhicule et en altérer l'aspect extérieur, les éléments de carrosserie, contrairement aux parois intérieures du plateau arrière, n'étant pas prévus pour le transport d'objets.

On peut également être amené à maintenir un portillon ouvert pour pouvoir disposer ces objets encombrants sur le plateau arrière. Le transport d'un objet dans ces conditions n'est pas satisfaisant. Un portillon n'est pas prévu pour être maintenu en position ouverte Des éléments de charnières de fixation du portillon peuvent être endommagés lors d'un tel transport, ou présenter une usure prématurée. Par ailleurs, le portillon en saillie vers l'arrière peut représenter un danger en cas de choc arrière sur le véhicule.

Un système de portillon de ce genre est connu du document US-A-6131989, qui comprend les caractéristiques du préambule de la revendication 1.

La présente invention a pour objet un système de portillon pour plateau arrière de véhicule automobile facilitant le chargement d'objets de dimensions importantes sur le plateau arrière.

L'invention concerne également un système de portillon de plateau arrière pour véhicule automobile de conception simple et de manipulation aisée.

Un tel système de portillon de plateau arrière pour véhicule automobile comprend un portillon monté battant par l'intermédiaire d'au moins une charnière pour l'ouverture du plateau arrière, le portillon étant monté avec possibilité de coulissement sur le plateau arrière depuis une position reculée sensiblement à l'aplomb de l'arrière du véhicule jusqu'à au moins une position avancée.

Le plateau arrière en position reculée permet de fermer le plateau arrière dans une configuration où ce dernier présente un volume maximal avec un pourtour fermé. Cependant, si une longueur du plateau arrière n'est pas suffisante, le portillon coulissant peut être glissé dans une position plus avancée, notamment dans une position avancée contre une paroi de séparation avec une cabine du véhicule, afin de ménager une ouverture arrière sur le plateau arrière du véhicule, tout en assurant le maintien et la fixation du portillon dans cette position avancée, et en dégageant le volume du plateau arrière.

Dans un mode de réalisation, le portillon coulisse longitudinalement vers l'avant du véhicule jusqu'à une position avancée à une extrémité avant du plateau arrière.

Dans un mode de réalisation, le système comprend des rails longitudinaux disposés sur le plateau arrière, le portillon étant monté coulissant sur les rails longitudinaux par l'intermédiaire de patins.

Avantageusement le système de portillon comprend des moyens de retenue du portillon en position reculée et des moyens de retenue du portillon dans au moins une position avancée. Ainsi, le portillon ne coulissera pas de façon non désirée lors d'accélération ou de décélération longitudinales du véhicule.

Dans un mode de réalisation, le portillon est monté battant sur le plateau arrière par l'intermédiaire d'une charnière désolidarisable pour permettre le coulissement du portillon. La charnière permet une ouverture du portillon battant, simplement dans le cadre d'une utilisation normale du plateau arrière, par exemple pour le chargement d'objet sur le plateau arrière. Dans le cas où la partie de la charnière solidaire de la carrosserie du véhicule est fixe, on prévoit alors que cette charnière puisse être désolidarisée facilement afin de libérer le portillon pour son mouvement longitudinal de coulissement. On pourrait également prévoir que la charnière possède une partie fixée sur le portillon et une partie elle-même montée coulissante sur le plateau arrière en étant munie de moyens de blocage dans des positions prédéterminées, et notamment dans la position de fonctionnement normal du portillon, en position arrière reculée.

Dans un autre mode de réalisation, le portillon est fixé par l'intermédiaire d'au moins une charnière sur un cadre lui-même monté coulissant sur le plateau arrière depuis une position reculée sensiblement à l'aplomb de l'arrière du véhicule jusqu'à au moins une position avancée.

Dans un mode de réalisation, le cadre est monté coulissant sur des rails longitudinaux par l'intermédiaire de patins.

Avantageusement, le système comprend des sabots mobiles entre une position rentrée et une position sortie dans laquelle ils viennent au moins en partie en saillie vers l'arrière du plateau. Ainsi lorsqu'une ouverture ménagée à l'arrière du plateau est dégagée en avançant le portillon, les sabots permettent d'augmenter une longueur de chargement du plateau arrière. Avantageusement, les sabots peuvent être adaptés pour supporter une roue de vélo, en présentant par exemple une cavité ouverte vers le haut lorsqu'ils sont en position sortie.

La présente invention et ses avantages seront mieux compris à l'étude de la description détaillée de modes de réalisation pris à titre d'exemples nullement limitatifs et illustrée par les dessins annexés, sur lesquels :
la figure 1 est une vue de 3/4 arrière d'un véhicule automobile à plateau arrière muni d'un portillon selon un aspect de l'invention ;
la figure 2 est une vue de 3/4 arrière du véhicule selon la figure 1 dans laquelle le portillon se situe dans une seconde configuration ;
la figure 3 est une vue de 3/4 arrière du véhicule selon la figure 1 dans lequel le portillon a été retiré ;
la figure 4 est une vue de 3/4 arrière du véhicule selon la figure 1 dans laquelle le portillon se situe dans une troisième configuration ; et
la figure 5 est une vue schématique de face en élévation d'un portillon muni d'un cadre coulissant.

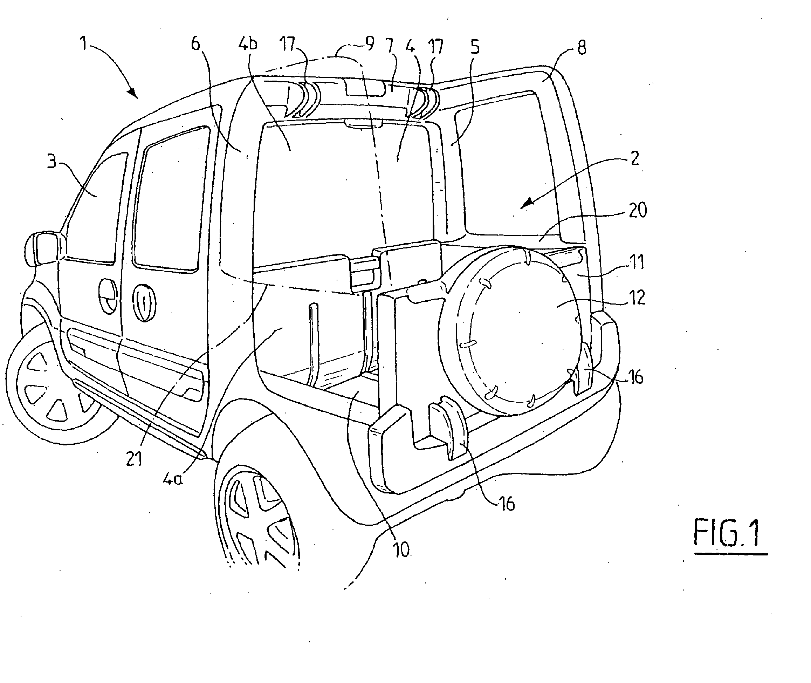

Sur la figure 1, un véhicule automobile référencé 1 dans son ensemble comprend un plateau arrière 2 séparé d'une cabine 3 par une cloison 4. La structure de la cabine 3 est formée à l'arrière par des montants latéraux 5, 6 reliés à leurs extrémités supérieures par une traverse 7.

Pour permettre la vision vers l'arrière, la cloison 4 comprend une partie inférieure 4a pour fermer longitudinalement le plateau arrière 2 et une partie supérieure sous la forme d'une vitre 4b. La vitre 4b paut coulisser verticalement en s'escamotant dans la partie inférieure 4a pour ouvrir la cabine 3 à l'arrière.

Le plateau arrière 2 comprenant un plancher 10, est limité latéralement par des ailes 20, 21, dont une est représentée schématiquement par sa silhouette en trait mixtes pour des raisons de clarté du dessin. Des arches 8, 9, dont une est représentée schématiquement en traits mixtes, s'étendent entre les extrémités supérieures des montants latéraux 5, 6 en rejoignant l'extrémité arrière du véhicule, en venant à l'aplomb de l'extrémité arrière du véhicule 1. Le plateau arrière 2 et les arches 8, 9 forment une structure ouverte sur le dessus permettant le chargement d'objets sur le plancher 10 du plateau arrière 2.

Un portillon battant 11 de forme générale rectangulaire est disposé à l'arrière du véhicule 1 pour fermer le plateau arrière 2. Le portillon 11 est monté pivotant selon un axe vertical par l'intermédiaire de charnières non visibles sur la figure 1. Le portillon 11 présente un logement de roue de secours intégré 12.

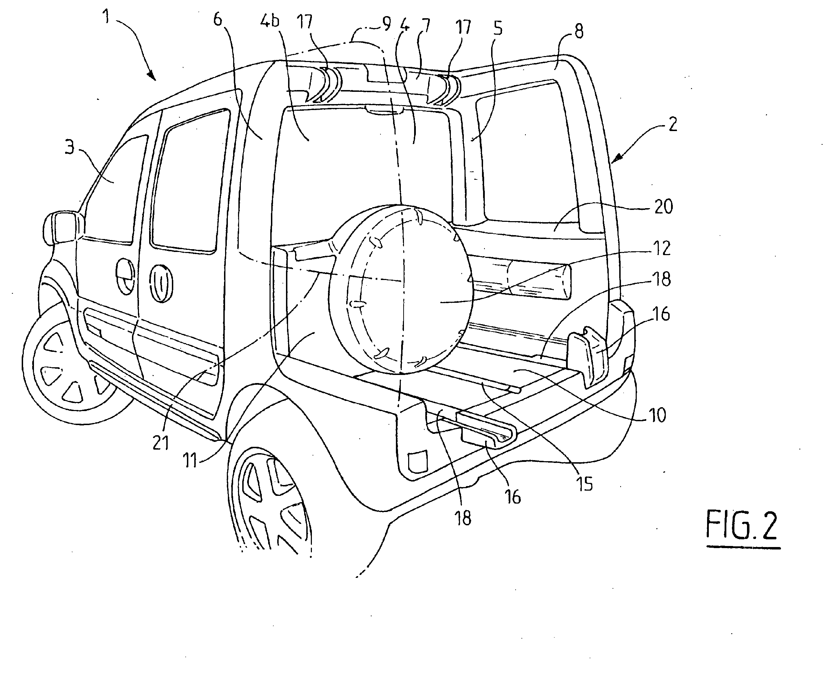

Comme représenté sur la figure 2, le portillon 11 peut être coulissé dans une position avancée dans laquelle il est poussé au fond du plateau arrière 2, en venant en contact avec la cloison de séparation 4 entre le plateau arrière 2 et la cabine 3. Ainsi, une ouverture est ménagée à l'arrière du plateau arrière 2 pour permettre le chargement d'objets encombrants.

Le portillon 11 est monté coulissant par exemple par l'intermédiaire d'un patin, non représenté sur la figure 2 pour des raisons de clarté du dessin, et coulissant dans un rail central longitudinal 15 ménagé dans le plancher 10 du plateau arrière 2.

Le véhicule 1 comprend des moyens de fixation d'objets encombrants, et notamment des moyens permettant la fixation de vélos sur le plateau arrière 2.

Pour ce faire, et comme on peut le voir en particulier sur la figure 2, le plateau arrière 2 comprend des sabots 16 montés pivotants entre une position verticale et une position horizontale dans laquelle ils viennent en saillie vers l'arrière du véhicule 1. Un sabot 16 est représenté en position sortie, l'autre étant représenté en position relevée. Les sabots 16 présentent des cavités, ouvertes vers le haut lorsqu'ils sont en position sortie. Des rainures 18 ménagées dans le plancher 10, sont formées dans le prolongement des cavités des sabots 16 afin de former, lorsque les sabots 16 sont en position sortie, des logements de longueur suffisante dans le sens longitudinal du véhicule automobile 1 pour permettre d'y disposer une roue d'un vélo de dimensions standards, tout en conservant des sabots 16 de longueur réduite pour diminuer un porte-à-faux vers l'arrière des sabots 16 en position sortie. Le véhicule 1 comprend encore des chapes 17 montées sur une face arrière de la traverse 7 de la cabine 2 et prévues pour le maintien de roues de vélos. Bien entendu, les chapes 17 sont alignées longitudinalement avec les sabots 16 et les rainures 18 correspondantes. De préférence, les sabots 16 présentent une surface arrière d'appui inclinée pour un appui longitudinalement d'une roue de vélo et une meilleure fixation du vélo.

Pour fixer un vélo, on avance le portillon 11, on sort un sabot 16, on dispose une roue de vélo dans le logement formés par le sabot 16 et la rainure correspondante 18, et on dispose l'autre roue du vélo dans la chape 17 correspondante, puis on fixe le vélo à l'aide de moyens appropriés

On comprend que si le portillon 11 restait en position reculée, il pourrait gêner un passage du cadre du vélo. L'avancée du portillon 11 permet de dégager l'espace de chargement du plateau arrière 2. Le sabot 16 permet d'augmenter localement une longueur de chargement pour le vélo, ce qui facilite sa fixation en position inclinée, pour limiter un dépassement du vélo à l'arrière du véhicule et sur le dessus du véhicule. On peut fixer de la même façon d'autres objets encombrants.

En revenant à la figure 1, sur laquelle le portillon 11 est en position reculée et fermé, les sabots 16 sont en position relevée et viennent contre le portillon 11, en affleurant l'extrémité arrière du véhicule 11 pour éviter de venir en saillie vers l'arrière.

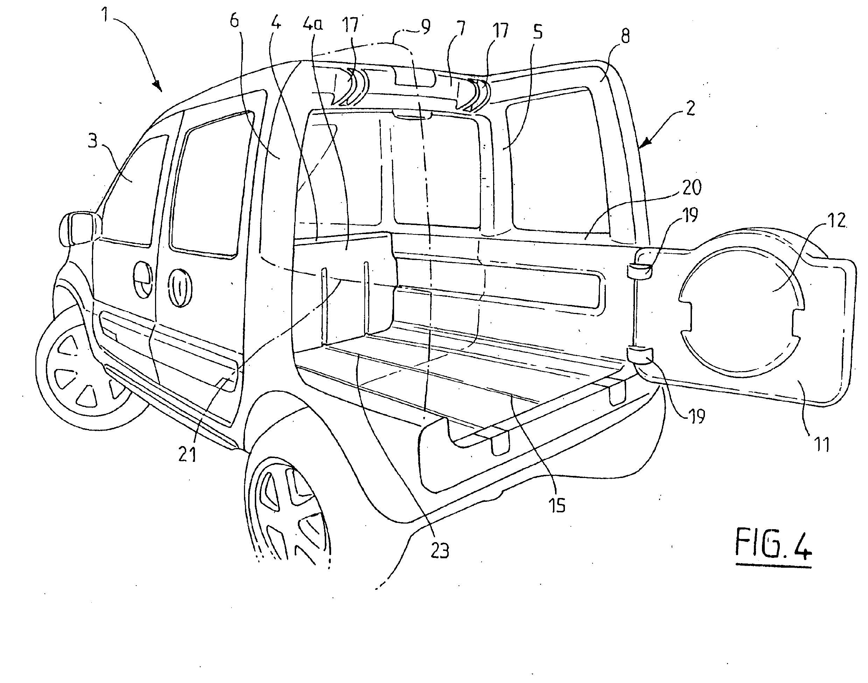

Sur la figure 4, sur laquelle les références aux éléments semblables à ceux de la figure 1 ont été reprises, le portillon battant 11 est représenté en position ouverte, dans laquelle il a pivoté autour de l'axe défini par des charnières 19, pour venir en position aligné avec une aile arrière droite 20 limitant latéralement le plateau arrière 2.

Pour permettre un coulissement du portillon 11, on prévoit des charnières 19 désolidarisables rapidement. Ainsi, une fois les charnières 19 désolidarisées, le portillon 11 est libre de coulisser sur le rail 15 du plateau arrière 2.

La cloison 4 séparant le plateau arrière 2 et la cabine 2 du véhicule 1 est, tel que représentée sur la figure 4, également avancée dans la cabine 3, en ayant été coulissé longitudinalement, pour augmenter une longueur de chargement du plateau arrière 2. Pour permettre un coulissement de la cloison 4, on a préalablement descendu la vitre 4b, puis coulisser la partie inférieure 4a.

De la même manière que pour le portillon 11 battant/coulissant, on prévoit que la cloison 4 comprend des patins, non représentés, coulissant dans des rails, comme par exemple un rail longitudinal central 23 prolongeant le rail longitudinal central 15 du plateau arrière. Ainsi, on pourra prévoir que le portillon 11 puisse coulisser jusqu'en venir contre la cloison 4 se trouvant elle-même déjà en position avancée.

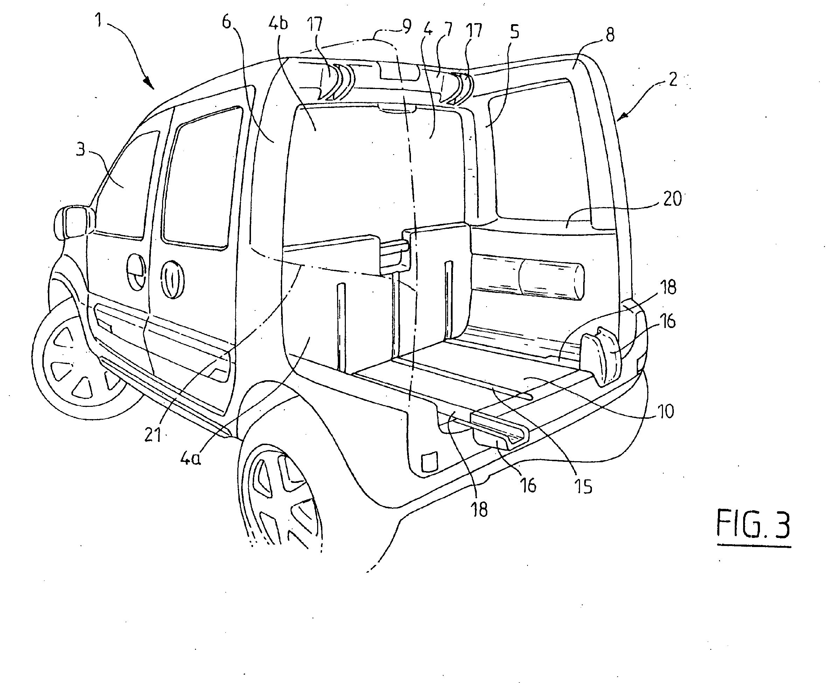

Les charnières désolidarisables 19 offrent la possibilité, lorsque l'on sait pertinemment ne pas avoir besoin du plateau arrière 2 pour un autre usage que celui de transporter des objets encombrants, de pouvoir retirer complètement le portillon 11. On se retrouve dans la configuration de plateau arrière 2 illustrée par la figure 3.

Pour retirer le portillon 11, il suffit d'ouvrir le portillon 11 et de désolidariser les charnières 19, ce qui libère le portillon 11. On peut encore désolidariser les charnières 19, libérer des moyens de blocage du portillon 11, et coulisser vers l'arrière pour le libérer.

Dans une variante, on prévoit que les charnières 19 puissent coulisser dans l'aile arrière 20 en glissant dans des rails, les charnières étant munis de moyen de blocage en position reculée du portillon 11 et dans au moins une position avancée du plateau 11. Une fois les charnières bloquées longitudinalement, seul un mouvement d'ouverture par pivotement du portillon 11 est possible.

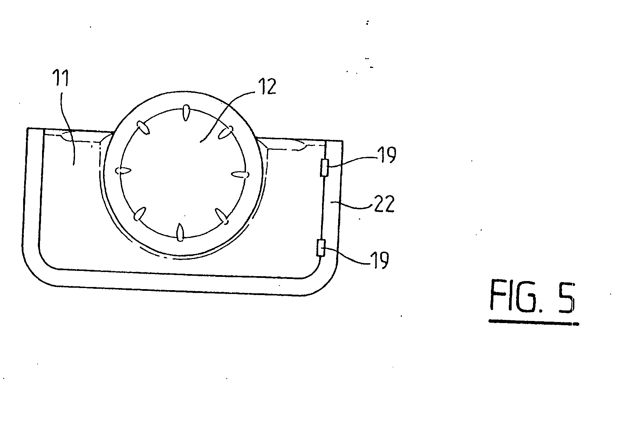

Sur la figure 5, où les références aux éléments semblables à ceux de la figure 4 ont été reprises, un portillon 11 est monté battant par l'intermédiaire de charnières 19 sur un cadre mobile 22 de forme générale en U.

Le cadre 22 coulisse entre une position arrière reculée et au moins une position avancée. Lorsque le cadre 22 est en position reculée, le portillon peut être ouvert pour permettre le chargement d'objets. Bien entendu, on prévoit des moyens de blocage du cadre 22 en position arrière reculée ou en position avancée, notamment en position avancée en contact avec la cloison de séparation 4.

Grâce à l'invention, on obtient un véhicule dont le plateau arrière est modulable pour faciliter le chargement d'objets encombrants et notamment le chargement de vélos généralement peu aisé. Le chargement de vélo se fait sans utiliser de porte-vélo supplémentaire, et donc sans nécessité de stocker un tel porte-vélo lorsqu'il n'est pas utilisé, et sans risque de mauvaise fixation du porte-vélo. Le plateau arrière est également adapté pour la fixation d'autres objets.

## Revendications

1. Système de portillon pour plateau arrière (2) de véhicule automobile comprenant un portillon (11) monté battant par l'intermédiaire d'au moins une charnière (19) pour l'ouverture du plateau arrière (2), **caractérisé par le fait que** le portillon (11) est monté avec possibilité de coulissement sur le plateau arrière depuis une position reculée sensiblement à l'aplomb de l'arrière du véhicule jusqu'à au moins une position avancée.

2. Système selon la revendication 1, **caractérisé par le fait que** le portillon (11) coulisse longitudinalement vers l'avant du véhicule jusqu'à une position avancée à une extrémité avant du plateau arrière (2).

3. Système selon l'une quelconque des revendications 1 ou 2, **caractérisé par le fait que** le système comprend des rails longitudinaux (15) disposés sur le plateau arrière (2), le portillon (11) étant monté coulissant sur les rails longitudinaux prévus par l'intermédiaire de patins.

4. Système selon l'une quelconque des revendications précédentes, **caractérisé par le fait qu**'il comprend des moyens de retenue du portillon (11) en position reculée et des moyens de retenue du portillon (11) dans au moins une position avancée.

5. Système selon l'une quelconque des revendications précédentes, **caractérisé par le fait que** le portillon (11) est monté battant sur le plateau arrière (2) par l'intermédiaire d'une charnière (19) désolidarisable pour permettre le coulissement du portillon (11).

6. Système selon l'une quelconque des revendications 1 à 4, **caractérisé par le fait que** le portillon (11) est fixé par l'intermédiaire d'au moins une charnière (19) sur un cadre (22) lui-même monté coulissant sur le plateau arrière (2) depuis une position reculée sensiblement à l'aplomb de l'arrière du véhicule jusqu'à au moins une position avancée.

7. Système selon la revendication 6, **caractérisé par le fait que** le cadre (22) est monté coulissant sur des rails longitudinaux (15) par l'intermédiaire de patins.

8. Système selon l'une quelconque des revendications précédentes, **caractérisé par le fait qu**'il comprend des sabots (16) mobiles entre une position rentrée et une position sortie dans laquelle ils viennent au moins en partie en saillie vers l'arrière du plateau.

## Claims

1. Gate system for a rear platform (2) of a motor vehicle, comprising a gate (11) which is swing-mounted via at least one hinge (19) for opening the rear platform (2), **characterized in that** the gate (11) is mounted with the possibility of sliding on the rear platform from a retreated position substantially in vertical alignment with the rear of the vehicle to at least one advanced position.

2. System according to Claim 1, **characterized in that** the gate (11) slides longitudinally towards the front of the vehicle to an advanced position at a front end of the rear platform (2).

3. System according to either one of Claims 1 and 2, **characterized in that** the system comprises longitudinal rails (15) arranged on the rear platform (2), the gate (11) being slidably mounted on the longitudinal rails provided via runners.

4. System according to any one of the preceding claims, **characterized in that** it comprises means for retaining the gate (11) in the retreated position and means for retaining the gate (11) in at least one advanced position.

5. System according to any one of the preceding claims, **characterized in that** the gate (11) is swing-mounted on the rear platform (2) via a hinge (19) which can be detached so as to enable the gate (11) to slide.

6. System according to any one of Claims 1 to 4, **characterized in that** the gate (11) is fastened via at least one hinge (19) to a frame (22) itself slidably mounted on the rear platform (2) from a retreated position substantially in vertical alignment with the rear of the vehicle to at least one advanced position.

7. System according to Claim 6, **characterized in that** the frame (22) is slidably mounted on longitudinal rails (15) via runners.

8. System according to any one of the preceding claims, **characterized in that** it comprises shoes (16) which can move between a retracted position and an extended position in which they at least partly project towards the rear of the platform.

## Patentansprüche

1. Schwingtürsystem für die Heckpritsche (2) eines Kraftfahrzeugs, das eine Schwingtür (11) aufweist, die mit Hilfe mindestens eines Scharniers (19) für die Öffnung der Heckpritsche (2) von selbst zufallend montiert ist, **dadurch gekennzeichnet, dass** die Schwingtür (11) mit einer Möglichkeit des Gleitens auf der Heckpritsche von einer zurückgeschobenen Stellung im Wesentlichen bündig mit dem Heck des Fahrzeugs bis zu mindestens einer vorgeschobenen Stellung montiert ist.

2. System nach Anspruch 1, **dadurch gekennzeichnet, dass** die Schwingtür (11) in Längsrichtung zur Vorderseite des Fahrzeugs bis zu einer vorgeschobenen Stellung an einem vorderen Ende der Heckpritsche (2) gleitet.

3. System nach einem der Ansprüche 1 oder 2, **dadurch gekennzeichnet, dass** es Längsschienen (15) aufweist, die auf der Heckpritsche (2) angeordnet sind, wobei die Schwingtür (11) mit Hilfe von Gleitschuhen auf den vorgesehenen Längsschienen gleitend montiert ist.

4. System nach einem der vorhergehenden Ansprüche, **dadurch gekennzeichnet, dass** es Mittel zum Festhalten der Schwingtür (11) in der zurückgeschobenen Stellung und Mittel zum Festhalten der Schwingtür (11) in mindestens einer vorgeschobenen Stellung aufweist.

5. System nach einem der vorhergehenden Ansprüche, **dadurch gekennzeichnet, dass** die Schwingtür (11) mit Hilfe eines Scharniers (19) von selbst zufallend auf die Heckpritsche (2) montiert ist, das lösbar ist, um das Gleiten der Schwingtür (11) zu erlauben.

6. System nach einem der Ansprüche 1 bis 4, **dadurch gekennzeichnet, dass** die Schwingtür (11) mit Hilfe mindestens eines Scharniers (19) an einem Rahmen (22) befestigt ist, der selbst auf der Heckpritsche (2) von einer zurückgeschobenen Stellung im Wesentlichen fluchtend mit dem Heck des Fahrzeugs bis zu mindestens einer vorgeschobenen Stellung gleitend montiert ist.

7. System nach Anspruch 6, **dadurch gekennzeichnet, dass** der Rahmen (22) mit Hilfe von Gleitschuhen auf Längsschienen (15) gleitend montiert ist.

8. System nach einem der vorhergehenden Ansprüche, **dadurch gekennzeichnet, dass** es Klötze (16) aufweist, die zwischen einer hochgeklappten Stellung und einer ausgeklappten Stellung beweglich sind, in der sie zumindest zum Teil zur Rückseite der Pritsche vorstehen.
